# EUROPÄISCHE PATENTSCHRIFT

(11) **EP 2 291 259 B1**
(45) Veröffentlichungstag und Bekanntmachung des Hinweises auf die Patenterteilung: **19.09.2012**
(21) Anmeldenummer: 09771825.8
(22) Anmeldetag: 25.05.2009
(51) Int. Cl.: B23K 9/12, B23K 9/26

(54) **KONTAKTROHR FÜR EINEN SCHWEIßBRENNER**
CONTACT TUBE FOR A WELDING TORCH
TUBE DE CONTACT POUR UN CHALUMEAU SOUDEUR

(30) Priorität: 30.06.2008 AT 10342008
(43) Veröffentlichungstag der Anmeldung: 09.03.2011
(73) Patentinhaber: Fronius International GmbH, 4643 Pettenbach (AT)
(72) Erfinder: RÜHRNÖSSL, Manfred, A-4030 Linz (AT); NÖBAUER, Harald, A-4533 Piberbach (AT); STEINMAURER, Markus, A-4550 Kremsmünster (AT)
(74) Vertreter: Heger, Georg
(86) Internationale Anmeldenummer: PCT/AT2009/000216
(87) Internationale Veröffentlichungsnummer: WO 2010/000002

(56) Entgegenhaltungen:
- WO-A-2006/046799
- US-A- 3 825 720
- US-B1- 6 559 416

## Beschreibung

Die Erfindung betrifft ein Kontaktrohr für einen Schweißbrenner, mit einer Längsachse, entlang welcher eine durchgehende Öffnung zur Führung eines Schweißdrahtes von einem Eintrittsbereich zu einem Austrittsbereich und von einer Austrittsöffnung in Richtung eines Werkstücks vorgesehen ist, wobei zur Kontaktierung des Schweißdrahtes im Austrittsbereich zumindest ein Schlitz vorgesehen ist.

Unter den Begriff Schweißdraht fallen sämtliche Zusatzwerkstoffe für verschiedenste Schweißverfahren.

Aus dem Stand der Technik ist eine Vielzahl von Kontaktrohren für Schweißbrenner bekannt, welche mit zumindest einem Schlitz im Bereich der Austrittsöffnung für den Schweißdraht versehen sind. Auf diese Weise wird das Kontaktrohr im Bereich des zumindest einen Schlitzes flexibel, sodass der Durchmesser der Austrittsöffnung reduziert werden kann. Dadurch kann eine Kontaktkraft zur Kontaktierung des Schweißdrahtes ausgeübt werden. Zur Erzielung dieser Kontaktkraft sind unterschiedliche Methoden bekannt.

Aus der EP 1 266 714 A1 ist beispielsweise ein Kontaktrohr für einen Schweißbrenner bekannt, welches mit zwei Schlitzen versehen ist. Die Öffnung zur Förderung des Schweißdrahtes wird mit Hilfe eines Rings, welcher im Bereich der Schlitze über das Kontaktrohr geschoben wird, eingeengt. Nachteilig ist hierbei, dass keine Nachjustierung der Kontaktkraft möglich ist, und die Austrittsöffnung durch den entstehenden Abrieb des Schweißdrahtes im Kontaktrohr wieder erweitert wird und somit die eingestellte Kontaktkraft nicht mehr aufrechterhalten werden kann.

Ebenso ist aus der US 6,710,300 B2 ein Kontaktrohr für einen Schweißbrenner bekannt, durch welches die Kontaktierung eines Schweißdrahtes verbessert werden soll. Dies erfolgt insbesondere durch Ausübung einer Kontaktkraft auf den Schweißdraht, indem ein mit zwei Schlitzen versehener Teil des Kontaktrohrs mit einer Feder gegen einen festen Körper gepresst wird. Nachteilig ist hierbei, dass die Beweglichkeit durch den Widerstand am festen Körper eingeschränkt ist, sodass die Kontaktkraft auf den Schweißdraht nur bedingt eingestellt werden kann und ein ver.stärkter Abrieb des Schweißdrahtes bewirkt wird. Des Weiteren ist der Wechsel des Kontaktrohrs mit einem erhöhten Zeitaufwand verbunden, da zusätzliche Verbindungen von Elementen mit dem Kontaktrohr gelöst werden müssen.

Die JP 2004001088 A und die WO 2008/018594 A1 beschreiben Kontaktrohre für Schweißbrenner, welche neben dem in Längsrichtung verlaufenden Schlitz im Austrittsbereich des Schweißdrahtes vertikal angeordnete Schlitze aufweisen, durch die eine Anpassung des Kontaktrohrs an den Schweißdraht verbessert werden kann.

Die US 6 559 416 B1 zeigt ein Kontaktrohr, welches aus im Wesentlichen zwei Teilen besteht, welche über eine Feder miteinander verbunden sind. Bei einem Wechsel des Schweißdrahtes, insbesondere des Schweißdrahtdurchmessers, ist eine Anpassung bzw. ein Tausch der Feder erforderlich.

Die Aufgabe der vorliegenden Erfindung besteht darin, eine möglichst konstante und permanente Kontaktierung des Schweißdrahtes über die Standzeit eines Kontaktrohrs eines Schweißbrenners zu schaffen. Nachteile bekannter Kontaktrohre sollen vermieden oder zumindest reduziert werden.

Gelöst wird diese Aufgabe dadurch, dass im Eintrittsbereich des einteilig ausgebildeten Kontaktrohrs zumindest ein weiterer Schlitz vorgesehen ist, wobei der Schlitz im Eintrittsbereich und der Schlitz im Austrittsbereich fluchtend angeordnet sind, und zwischen dem Schlitz im Austrittsbereich und dem zumindest einen Schlitz im Eintrittsbereich ein als Drehpunkt dienender Steg gebildet ist, um welchen Drehpunkt eine gegengleiche Bewegung der beiderseits der Schlitze angeordneten Teile des Kontaktrohrs ermöglicht wird. Durch die fluchtende Anordnung des Schlitzes im Eintrittsbereich und des Schlitzes im Austrittsbereich wird eine gegengleiche Bewegung der Teile des Kontaktrohrs beiderseits der Schlitze ermöglicht. Vorteilhaft ist hierbei, dass die für die Kontaktierung erforderliche Kontaktkraft automatisch nachgestellt wird, indem im Eintrittsbereich des Kontaktrohrs eine fixe Vorspannung eingestellt wird. Dadurch kann der Schweißdraht während eines Schweißprozesses permanent kontaktiert werden, wodurch die Schweißqualität erhöht wird. Der Austrittsbereich ist durch den Schlitz flexibel bzw. beweglich, wodurch das Kontaktrohr für unterschiedliche Schweißdrahtdurchmesser, in einem gewissen Bereich, verwendet werden kann. Somit kann die Kontaktkraft optimal auf das Material und den Durchmesser des jeweiligen Schweißdrahtes abgestimmt werden. Dies hat weiters den Vorteil, dass die Förderkraft für den Schweißdraht minimal gehalten werden kann und gleichzeitig ein optimaler Stromübergang auf den Schweißdraht sichergestellt wird. Dadurch ist auch der Abrieb des Schweißdrahtes und auch der Abrieb der Öffnung im Kontaktrohr minimal bzw. wird dieser durch dieses flexible Verschleißteil ausgeglichen, sodass eine permanente Kontaktierung des Schweißdrahtes gegeben ist. Weiters kann das Kontaktrohr schnell und einfach gewechselt werden.

Vorteilhafterweise ist der Schlitz im Austrittsbereich bis vor der Austrittsöffnung des Kontaktrohrs entlang der Längsachse und anschließend schräg zur Längsachse verlaufend angeordnet, sodass beiderseits des Schlitzes zwei in ihrer Form unterschiedliche Backen gebildet sind. Durch eine derartige Führung des Schlitzes im Austrittsbereich des Kontaktrohrs ist ein Schutz vor Verschmutzungen, wie Schweißspritzern, gegeben, da der Schlitz keine direkte Angriffsfläche darstellt.

Vorteilhafterweise ist eine Backe im Wesentlichen L-förmig ausgebildet und umschließt die Austrittsöffnung für den Schweißdraht.

Gemäß einem weiteren Merkmal der Erfindung ist zur Kontaktierung des Schweißdrahtes im Austrittsbereich des Kontaktrohrs ein Kontaktbereich vorgesehen, welcher an den Durchmesser des Schweißdrahtes anpassbar ist, und die Öffnung des Kontaktrohrs bis zum Kontaktbereich derart ausgebildet, dass der Schweißdraht vom Eintrittsbereich bis zum Kontaktbereich im Austrittsbereich im Wesentlichen freilaufend geführt werden kann. Dadurch wird eine sichere permanente Kontaktierung des Schweißdrahts erreicht, da sich der Kontaktbereich im Wesentlichen nicht verändert und somit auch ein konstanter Lichtbogen gewährleistet ist.

Gemäß einer weiteren Ausgestaltung des Kontaktrohrs ist im Eintrittsbereich eine ringförmige Erweiterung mit einem äußeren Durchmesser größer als der übrige Außendurchmesser des Kontaktrohrs vorgesehen, und an der zur Austrittsöffnung gerichteten Seite der Erweiterung eine Anschlagfläche ausgebildet. Diese Anschlagfläche bietet einen Halt für ein Befestigungsmittel, über welches das Kontaktrohr mit dem Schweißbrenner verbunden werden kann.

Die Innenfläche der ringförmigen Erweiterung ist vorzugsweise konisch zur Öffnung des Kontaktrohrs zusammenlaufend zur Aufnahme eines entsprechend konisch geformten Zwischenstücks zur Befestigung am Schweißbrenner ausgebildet. Durch die Aufnahme eines entsprechend konisch geformten Zwischenstücks in diese konisch geformte Innenfläche der ringförmigen Erweiterung kann das Kontaktrohr im Eintrittsbereich gespreizt und in der Folge im Austrittsbereich zueinander bewegt werden. Dies ist durch die Beweglichkeit des Kontaktrohrs durch die erfindungsgemäße Anordnung der Schlitze im Eintrittsbereich- und Austrittsbereich möglich. Durch die Beweglichkeit des Kontaktrohrs wird auch eine bessere Regulierung und Übertragung der Kontaktkraft auf den Schweißdraht bewirkt.

Von Vorteil ist auch, wenn die Innenfläche der ringförmigen Erweiterung gewölbt ausgebildet ist. Dadurch wird der Kontakt zwischen dem entsprechend konisch geformten Zwischenstück und dem Kontaktrohr verbessert, woraus auch ein besserer Stromübergang und eine bessere Wärmeableitung resultiert.

Vorteilhafterweise ist eine Überwurfmutter zur Befestigung des Zwischenstücks vorgesehen, sodass durch das konisch geformte Zwischenstück der Eintrittsbereich gespreizt und in der Folge die Backen im Austrittsbereich zueinander bewegt werden.

Die Überwurfmutter kann so ausgebildet sein, dass sie als Schutzhülle über dem Austrittsbereich des Kontaktrohrs angeordnet ist.

Wenn der Austrittsbereich des Kontaktrohrs zur Austrittsöffnung hin konisch zusammenlaufend ausgebildet ist, kann eine Reduktion der Fläche zur Haftung von Schweißspritzern erreicht werden. Gegebenenfalls ist die Überwurfmutter in diesem Bereich ebenso konisch ausgebildet.

Gemäß einer Ausführungsform weist das Zwischenstück eine Bohrung für den Schweißdraht, einen Konus an der Seite zum Einsatz an die konisch geformte Innenfläche, und ein Außengewinde an der dem Konus gegenüberliegenden Seite zur Verbindung mit dem Schweißbrenner auf. Durch ein derartig ausgebildetes Zwischenstück kann das Kontaktrohr für beliebige Schweißbrenner eingesetzt werden, da das Zwischenstück als Adapter einsetzbar ist.

An der Seite des Konus des Zwischenstücks ist vorzugsweise ein Außengewinde zur Verbindung mit einem entsprechenden Innengewinde der Überwurfmutter angeordnet.

Die vorliegende Erfindung wird anhand der beigefügten, schematischen Zeichnungen näher erläutert.

Darin zeigen:
- Fig. 1: eine schematische Darstellung eines Schweißgerätes;
- Fig. 2: einen Schweißbrenner in schematischer Explosionsdarstellung;
- Fig. 3: ein Schnittbild einer ersten Ausführungsform eines erfindungsgemäßen Kontaktrohrs;
- Fig. 4: eine perspektivische Ansicht des Kontaktrohrs gemäß Fig. 3;
- Fig. 5: ein Schnittbild einer Überwurfmutter zur Befestigung des Kontaktrohrs an einem Schweißbrenner;
- Fig. 6: eine perspektivische Ansicht der Überwurfmutter gemäß Fig. 5;
- Fig. 7: ein Schnittbild eines Zwischenstücks zur Befestigung des Kontaktrohrs an einem Schweißbrenner;
- Fig. 8: eine perspektivische Darstellung des Zwischenstücks gemäß Fig. 7;
- Fig. 9: ein Schnittbild des mit der Überwurfmutter und dem Zwischenstück an einem Brennerkörper eines Schweißbrenners angeordneten Kontaktrohrs vor dessen Fixierung;
- Fig. 10: die Anordnung gemäß Fig. 9 nach entsprechender Fixierung am Brennerkörper;
- Fig. 11: die Anordnung gemäß Fig. 10 mit einem im Kontaktrohr geförderten Schweißdraht;
- Fig. 12: ein Schnittbild einer Variante der Kontaktrohre an einem Tandem-Schweißbrenner;
- Fig. 13: ein Schnittbild einer weiteren Ausführungsform eines Kontaktrohrs; und
- Fig. 14: eine perspektivische Ansicht des Kontaktrohrs gemäß Fig. 13.

Einführend wird festgehalten, dass gleiche Teile der Varianten und Ausführungsformen mit gleichen Bezugszeichen versehen werden.

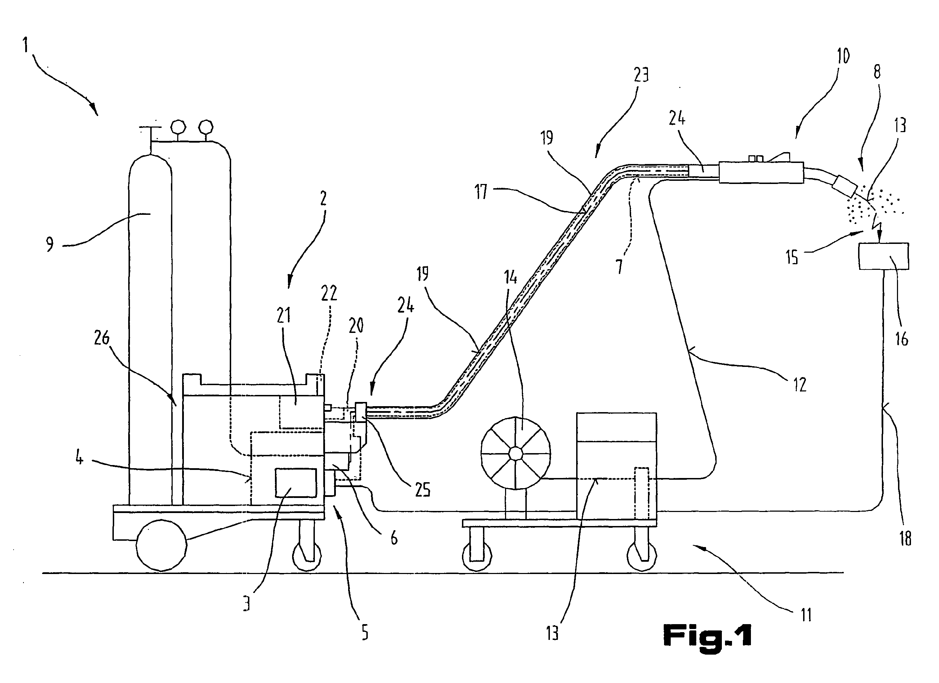

In Fig. 1 ist ein Schweißgerät 1 bzw. eine Schweißanlage für verschiedenste Prozesse bzw. Verfahren, wie z.B. MIG/MAG-Schwei-βen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium, Argon oder dergl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der nicht abschmelzenden Elektrode, nicht dargestellt, und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmägeräte, nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

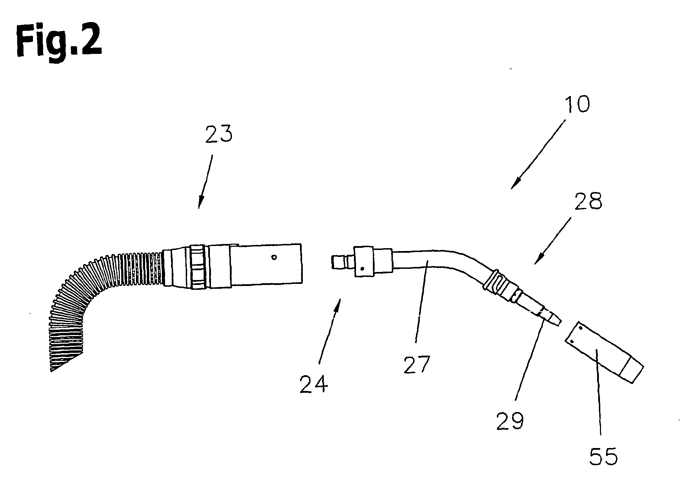

In Fig. 2 ist ein stark vereinfachter Aufbau eines als MIG-Brenner ausgebildeten Schweißbrenners 10 dargestellt. Diese Explosionsdarstellung zeigt die wesentlichen Komponenten des Schweißbrenners 10, nämlich das Schlauchpaket 23, die Kupplungsvorrichtung 24, einen Rohrbogen 27, einen Brennerkörper 28 als stromführenden Teil, an welchem schlussendlich ein Kontaktrohr 29 und eine Gasdüse 55 befestigt wird. Das Schlauchpaket 23 wird über die Kupplungsvorrichtung 24 mit dem Rohrbogen 27 bzw. dem Schweißbrenner 10 verbunden.

Das Schlauchpaket 23 kann auch an einem Brennergriff angeschlossen werden, welcher über die Kupplungsvorrichtung 24 mit dem Rohrbogen 27 verbunden wird. Zum Verbinden des Schlauchpaketes 23 mit dem Brennergriff kann ebenfalls eine derartige Kupplungsvorrichtung 24 eingesetzt werden. Der Brennergriff kann jedoch auch als Zwischenstück ausgebildet sein und somit beispielsweise eine Befestigung des Schweißbrenners 10 über das Zwischenstück an einem Roboter vorgenommen werden.

Der Rohrbogen 27 beinhaltet unter anderem Kühlkanäle, Versorgungsleitungen für die elektrische Energie, Versorgungsleitungen für das Gas 8 und insbesondere die Versorgungsleitung 12 bzw. Zuführvorrichtung 12 für den Schweißdraht 13, die sogenannte Seele bzw. Drahtseele, wobei dies dem Rohrbogen 27 über das Schlauchpaket 23 zugeführt wird. Der Schweißdraht 13 wird somit von der Vorratstrommel 14 über die Zuführvorrichtung 12 bzw. über eine entsprechende Innenbohrung in der Zuführvorrichtung 12 bis zum Kontaktrohr 29 gefördert. Dies erfolgt zumindest durch das Drahtvorschubgerät 11. Im Kontaktrohr 29 wird der Schweißdraht 13 mit elektrischer Energie versorgt, sodass ein Lichtbogen-Schweißprozess durchgeführt werden kann. Demzufolge ist das Kontaktrohr 29 aus einem elektrisch leitfähigen und im Wesentlichen verschleißfesten Material, wie beispielsweise Kupfer, Kupferlegierungen (Wolfram), usw., gefertigt.

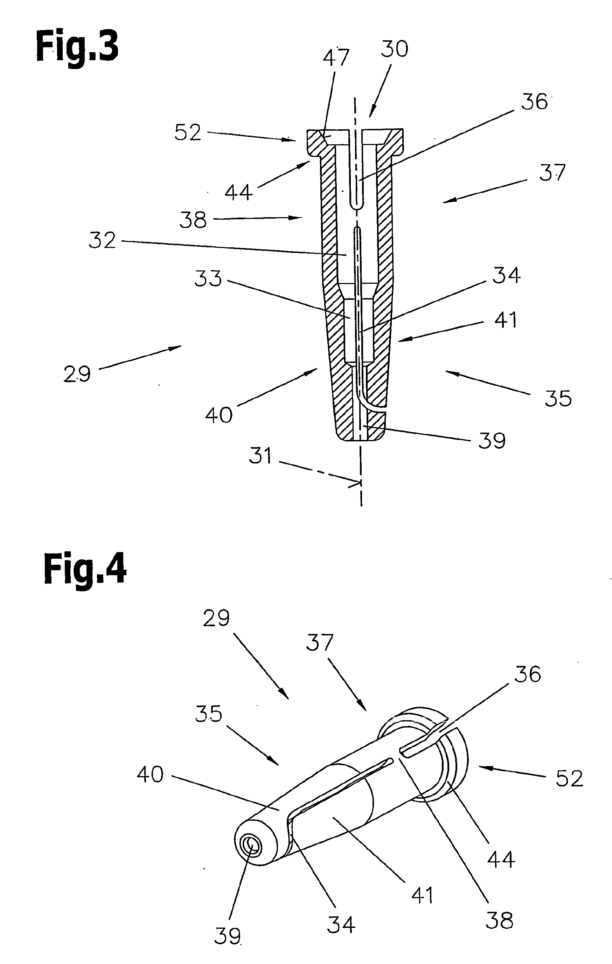

Wie aus dem Stand der Technik bekannt, weist das Kontaktrohr 29 eine durchgehende axiale Öffnung 30 entlang einer Längsachse 31 des Kontaktrohrs 29 auf, wobei die Öffnung 30 beispielsweise in eine Führungsbohrung 32, eine Bohrung 33 und eine Austrittsöffnung 39 für den Schweißdraht 13 - wie später in Fig. 3 dargestellt - unterteilt werden kann. Für einen stabilen Schweißprozess ist es von Bedeutung, dass die Kontaktierung des Schweißdrahtes 13 möglichst immer in der Austrittsöffnung 39 erfolgt, wobei der Schweißdraht 13 bis dahin zumindest eine kurze Strecke, wie beispielsweise die Länge der Bohrung 33, frei verlaufen kann. Die Führungsbohrung 32 im Kontaktrohr 29 kann selbstverständlich auch entfallen. In diesen Fällen endet die Zuführvorrichtung bzw. Drahtseele 12 bereits im Wesentlichen im Brennerkörper 28, also bevor der Schweißdraht 13 in das Kontaktrohr 29 eintritt. Demzufolge verläuft der Schweißdraht 13 bis zur Austrittsöffnung 39 frei, da die Bohrung 33 wesentlich grö-βer ausgebildet ist als der Durchmesser des Schweißdrahtes 13. Somit findet üblicherweise im Bereich der Bohrung 33 keine Kontaktierung des Schweißdrahtes 13 mit dem Material des Kontaktrohrs 29 statt und daher auch kein frühzeitiger Stromübergang.

Erfindungsgemäß wird das Kontaktrohr 29 entsprechend ausgebildet, um die für einen stabilen Schweißprozess erforderliche Kontaktierung durch eine Kraft auf den Schweißdraht erzielen zu können. Die Ausübung der Kraft kann durch zusätzliche Hilfsmittel unterstützt werden. Durch das erfindungsgemäße Kontaktrohr 29 wird gewährleistet, dass der Schweißdraht 13 immer an der selben Stelle und permanent kontaktiert wird.

Auch wird das erfindungsgemäße Kontaktrohr 29 so ausgebildet, dass es ein herkömmliches Kontaktrohr, welches mittels einer Schraubverbindung am Brennerkörper 28 befestigt ist, ersetzen kann.

In den Fig. 3 bis 9 ist eine Ausführungsform des Kontaktrohrs 29 schematisch im Schnittbild dargestellt. Das erfindungsgemäße Kontaktrohr 29 weist im Austrittsbereich 35 eine Schlitz 34 und im Eintrittsbereich 37 einen Schlitz 36 auf. Zwischen dem Schlitz 34 im Austrittsbereich 35 und dem zumindest einen Schlitz 36 im Eintrittsbereich 37 wird ein als Drehpunkt dienender Steg 38 gebildet. Der Schlitz 34 im Austrittsbereich 35 verläuft bis kurz vor der Austrittsöffnung 39 des Kontaktrohrs 29 entlang der Längsachse 31 und anschließend schräg zu dieser. Dadurch resultieren zwei unterschiedliche Backen 40, 41 im Austrittsbereich 35, wobei eine Backe 40 im Wesentlichen L-förmig ausgebildet ist und die Austrittsöffnung 39 enthält. Wichtig ist, dass das Kontaktrohr 29 weiterhin einteilig ausgebildet ist.

Aus der perspektivischen Ansicht des Kontaktrohrs 29 gemäß Fig. 4 sind der Schlitz 34 im Austrittsbereich 35 sowie der Schlitz 36 im Eintrittsbereich 37 besser ersichtlich. Ebenso ist zu erkennen, dass der Schlitz 34 und der Schlitz 36 durch einen Steg 38 verbunden bzw. getrennt sind, wobei der Steg 38 die Verbindung zwischen dem Eintrittsbereich 37 und dem Austrittsbereich 35 darstellt. Die Öffnung 30 des Kontaktrohrs 29 wird durch die Führungsbohrung 32, die Bohrung 33 und der Austrittsöffnung 39 gebildet. Die Führungsbohrung 32, die Bohrung 33 und die Austrittsöffnung 39 sind konzentrisch mit jeweils einer konischen Verjüngung angeordnet. Dies ist insbesondere für einen reibungsarmen und zentrierten Übergang des Schweißdrahtes 13 in die Austrittsöffnung 39 des einteilig ausgebildeten Kontaktrohrs 29 von Bedeutung. Wesentlich ist auch, dass der Durchmesser der Bohrung 33 und der Führungsbohrung 32 so gewählt ist, dass keine Kontaktierung des Schweißdrahtes 13 in der Bohrung 33 erfolgt, sondern erst in der Austrittsöffnung 39. Beispielsweise ist der Durchmesser der Bohrung 33 drei bis zehn Mal so groß wie der Durchmesser des Schweißdrahtes 13. Somit wird durch den in der Bohrung 33 freilaufenden Schweißdraht 13 erreicht, dass der Schweißdraht 13 nur in der Austrittsöffnung 39 kontaktiert wird. Dies wirkt sich insbesondere auf den Werkstoffübergang und somit auf den gesamten Schweißprozess positiv aus, da der Schweißdraht 13 stets an derselben Stelle kontaktiert wird.

Damit die Kontaktierung des Schweißdrahtes 13 stets an derselben Stelle, also in der Austrittsöffnung 39, erfolgt, ist die Wirkung des Schlitzes 36 im Eintrittsbereich 37 von Bedeutung. Dieser ermöglicht im Wesentlichen die Einbringung einer Kraft auf das Kontaktrohr 29 bzw. den darin verlaufenden Schweißdraht 13. Die Kraft auf den Schweißdraht 13 kann mit einer weiter unten beschriebenen Überwurfmutter 42, welche zur Befestigung des Kontaktrohrs 29 mit dem Schweißbrenner 10 dient, eingestellt werden.

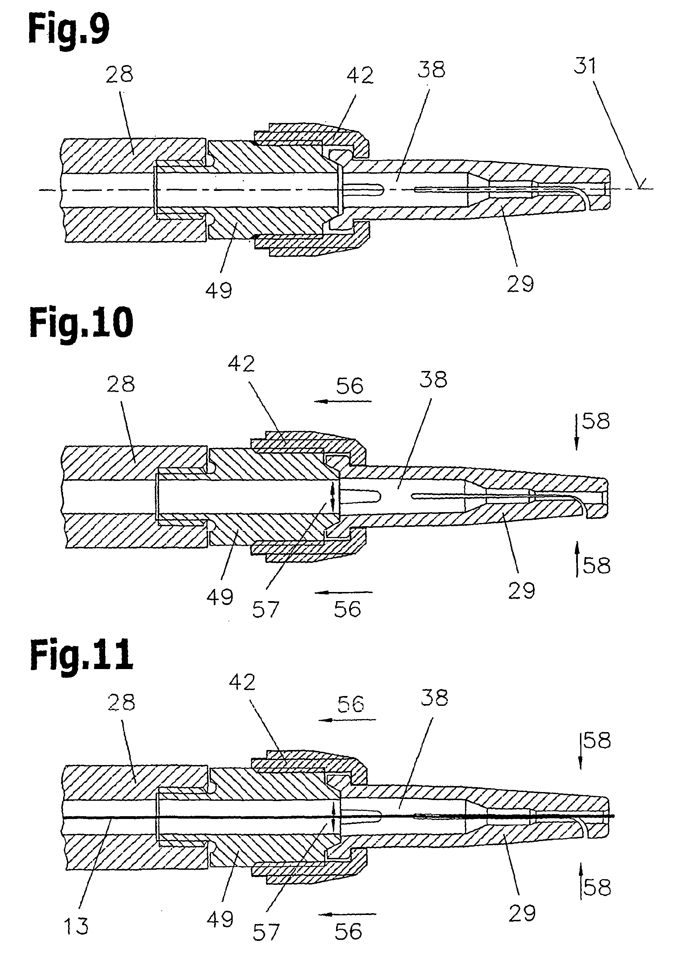

Aus Fig. 9 ist ersichtlich, dass das Kontaktrohr 29 mit der Überwurfmutter 42 an einem Zwischenstück 49, welches wiederum am Brennerkörper 28 montiert ist, gehalten ist. In diesem Fall wirken noch keine Kräfte auf das Kontaktrohr 29 bzw. auf den darin geführten Schweißdraht 13. Wird nun das Kontaktrohr 29 am Zwischenstück 49 befestigt, wie in Fig. 10 dargestellt, so resultiert aus der durch die Pfeile 56 dargestellten Kraft, welche sich durch das vollständige Befestigen der Überwurfmutter 42 einstellt, dass der Eintrittsbereich 37 gespreizt wird - wie durch den Doppelpfeil 57 dargestellt, und der Schlitz 34 im Austrittsbereich 35 zusammengedrückt wird bzw. die Backen 40, 41 zueinander bewegt werden. Zur vollständigen Befestigung des Kontaktrohrs 29 wird die Überwurfmutter 42 solange gedreht, bis diese an der Anschlagfläche 44 der ringförmigen Erweiterung 52 des Kontaktrohrs 29 ansteht. Das Kontaktrohr 29 weist eine fixe Vorspannung auf, welche über die beweglichen bzw. flexiblen Backen 40, 41 eine variable Kontaktkraft ermöglicht. Somit wird der Schweißdraht 13 im Wesentlichen über seine gesamte Standzeit des Kontaktrohrs 29 mit der optimalen Kontaktkraft kontaktiert. Die Kontaktkraft zur permanenten Kontaktierung des Schweißdrahts 13 wird durch die Pfeile 58 dargestellt. Insbesondere wird die durch den Schlitz 34 im Austrittsbereich 35 gebildete Backe 40 und die Backe 41 im Bereich der Austrittsöffnung 39 derart zueinander bewegt, dass sich ein Durchmesser der Austrittsöffnung 39 einstellt, der kleiner als der Durchmesser des Schweißdrahtes 13 ist. Somit wird der durch die Austrittsöffnung 39 geförderte Schweißdraht 13, wie in Fig. 11 dargestellt, im Wesentlichen eingeklemmt bzw. muss der Schweißdraht 13 die Backen 40, 41 auseinander drücken. Dies bewirkt, dass der Schweißdraht 13 permanent an derselben Stelle kontaktiert wird. Der Austrittsbereich 35 stellt somit einen definierten Kontaktbereich mit zumindest zwei aus den Backen 40, 41 gebildeten Kontaktstellen her. Diese Kontaktstellen befinden sich unmittelbar nach der Bohrung 33, also in einem ersten Teil der Austrittsöffnung 39. Der zweite Teil der Austrittsöffnung 39 befindet sich in der L-förmigen Backe 40, welche den zweiten Teil der Austrittsöffnung 39 vollständig umschließt und im Wesentlichen als Führung für den Schweißdraht 13 dient. Diese Führung kann auch entsprechend isoliert werden.

Die soeben beschriebene Wirkung ist unabhängig davon, in welche Richtung der Schweißdraht 13 durch die Öffnung 30 des Kontaktrohrs 29 gefördert wird. Somit kann das erfindungsgemäße Kontaktrohr 29 auch für einen CMT (Cold Metal Transfer)-Schweißprozess eingesetzt werden, bei welchem der Schweißdraht 13 sowohl in Richtung Werkstück 16 als auch vom Werkstück 16 weg gefördert wird.

Der Steg 38 dient bei einem derartigen Kontaktrohr 29 als Drehpunkt und ermöglicht die gegengleiche Bewegung der Teile des Kontaktrohrs 29 im Eintrittsbereich 37 und Austrittsbereich 35. Wird der Eintrittsbereich 37 gespreizt, dann wird der Austrittsbereich 35 bzw. die Backen 40, 41 zusammengedrückt. Demnach sind also die Backen 40, 41 im definierten Kontaktbereich beweglich. Die dafür benötigten Kräfte werden also durch den Steg 38 vom Eintrittsbereich 37 zum Austrittsbereich 35 übertragen, sodass eine permanente Kontaktierung des Schweißdrahtes 13 gewährleistet ist. Die erforderlichen Kräfte sind auf den Durchmesser bzw. auf einen definierten Bereich von Durchmessern des Schweißdrahtes 13 abgestimmt. Allgemein resultieren die Kräfte aus dem Zusammenhang zwischen der Breite des Schlitzes 34 und der Breite des Schlitzes 36. Je breiter der Schlitz 36 im Eintrittsbereich 37 ist, desto weiter können sich die Backen 40, 41 zueinander bewegen. Die Breite des Schlitzes 34 bewirkt hingegen, wie weit sich die Backen 40, 41 durch den Schweißdraht 13 auseinanderdrücken lassen und für welchen Schweißdrahtdurchmesser das Kontaktrohr 29 ausgelegt ist, oder für welchen Bereich von Schweißdrahtdurchmessern es verwendet werden kann. Diese Zusammenhänge sind auch von der Breite des Stegs 38 bzw. dem Abstand zwischen dem Schlitz 34 und dem Schlitz 36 abhängig. Bei einem schmalen Steg 38 kann mehr Kraft übertragen werden und umgekehrt. Aufgrund dieser Zusammenhänge kann also das erfindungsgemäße Kontaktrohr 29 gefertigt werden, welches auf einen bestimmten oder auf mehrere in einem Bereich liegende Schweißdrahtdurchmesser abgestimmt ist. Somit kann für diese Schweißdrähte 13 eine permanente Kontaktierung gewährleistet werden.

Dazu sollte jedoch der freiliegende Schlitz 34 nicht verschmutzt werden, wie dies beispielsweise durch Schweißspritzer häufig der Fall ist. Diese können beispielsweise auch den Schlitz 34 verkleben, sodass die erfindungsgemäße Wirkung nicht mehr gegeben wäre. Dies wird erfindungsgemäß dadurch gelöst, dass der Schlitz 34 im Wesentlichen bis zur Mitte der Austrittsöffnung 39 entlang der Längsachse 31 und anschließend schräg zur Längsachse 31 verläuft, wie bereits erwähnt. Dadurch verläuft der Schlitz 34 hinter der L-förmigen Backe 40 und schützt diesen vor Verschmutzungen.

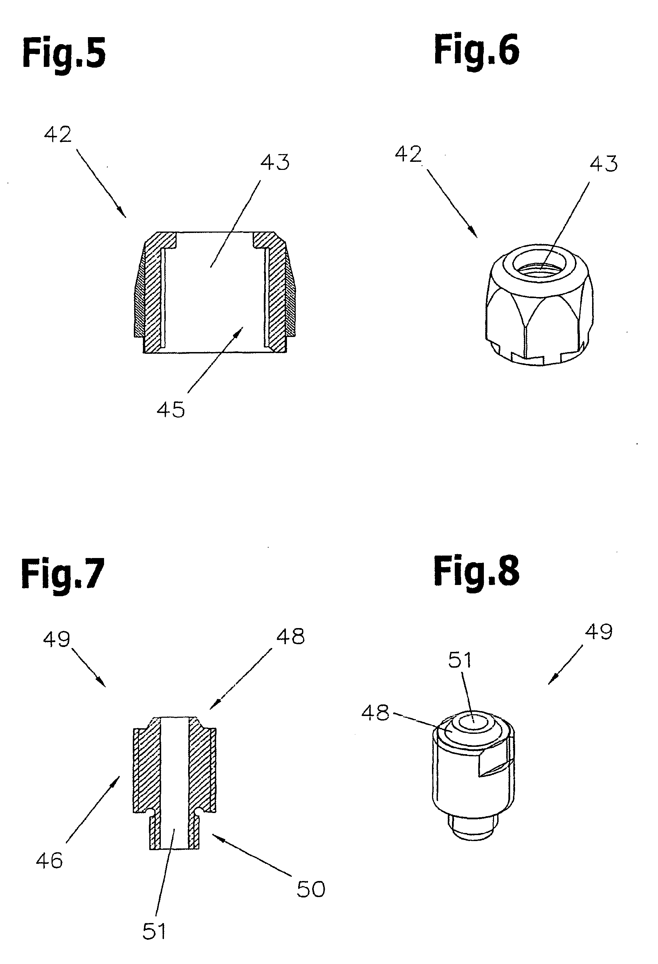

Wie bereits angesprochen, wird das Kontaktrohr 29 mit der Überwurfmutter 42 am Brennerkörper 28 bzw. am Zwischenstück 49 befestigt, da das erfindungsgemäße Kontaktrohr 29 keine eigene Befestigungsmöglichkeit, wie eine Schraubverbindung oder ähnliches aufweist. Im Detail ist die Überwurfmutter 42 in den Fig. 5 und 6 beschrieben. Die Überwurfmutter 42 kann einen Sechskant, zur Betätigung mit einem entsprechenden Werkzeug aufweisen.

Grundsätzlich weist die Überwurfmutter 42 die Form einer Hutmutter auf, welche einseitig eine Öffnung 43 mit einem Durchmesser aufweiset, der dem Außendurchmesser des Kontaktrohrs 29 entspricht, sodass die Überwurfmutter 42 über den Austrittsbereich 35 des Kontaktrohrs 29 bis zu einer Anschlagfläche 44 geschoben werden kann. Die Anschlagfläche 44 ist im Eintrittsbereich 37 angeordnet oder bildet direkt den Anfang des Eintrittsbereichs 37. Das Kontaktrohr 29 weist im Eintrittsbereich 37 eine ringförmige Erweiterung 52 auf, deren Durchmesser größer als der Au-βendurchmesser des restlichen Kontaktrohrs 29 ist. Der Durchmesser der Anschlagfläche 44 ist größer als der Außendurchmesser des Kontaktrohrs 29, wobei der Durchmesser der Anschlagfläche 44 dem Innendurchmesser der Überwurfmutter 42 entspricht. Somit kann das Kontaktrohr 29 durch die Überwurfmutter 42 am Brennerkörper 28 befestigt werden. Dies erfolgt bevorzugt durch ein entsprechendes Innengewinde 45 in der Überwurfmutter 42 sowie einem dazu korrespondierenden Außengewinde 46 am Brennerkörper 28. Die ringförmige Erweiterung 52 des Kontaktrohrs 29 weist eine Innenfläche 47 auf, die zur Öffnung 33 des Kontaktrohrs 29 konisch ausgebildet ist. Diese konische Innenfläche 47 ist erforderlich, um die gewünschte Spreizung des Eintrittsbereichs 37 zu erreichen. Dazu ist ein zur konischen Innenfläche 47 korrespondierend konisch geformtes Zwischenstück 49 vorgesehen. Dabei weist der Konus 48 des Zwischenstücks 49 einen minimal größeren Durchmesser auf als der innere Durchmesser der ringförmigen Erweiterung 52. Dadurch wird beim Aufschrauben der Überwurfmutter 42 und somit des Kontaktrohrs 29 am Brennerkörper 28 erreicht, dass der Schlitz 36 im Eintrittsbereich 37 auseinander gedrückt bzw. gespreizt wird. Dies wiederum bewirkt, dass sich die Backen 40, 41 im Austrittsbereich 35 zueinander bewegen und eine permanente Kontaktierung des Schweißdrahtes 13 erreicht wird. Demnach übt die Überwurfmutter 42 über den Konus 48 des Zwischenstücks 49 eine Kraft auf das Kontaktrohr 29 aus, durch welche eine Kontaktkraft im Austrittsbereich 35 resultiert, wie im Detail bereits beschrieben wurde. Diese Kontaktkraft ermöglicht schlussendlich die permanente Kontaktierung des Schweißdrahtes 13.

Selbstverständlich kann die Anschlagfläche 44 auch im Bereich des Stegs 38 liegen, wobei die konische Innenfläche 47 direkt am Anfang des Eintrittsbereichs 37 stets erhalten bleibt. Demzufolge wird die Höhe der ringförmigen Erweiterung 52 variiert. Bevorzug wird daher die Platzierung der Anschlagfläche 44 am Kontaktrohr 29 auf die Anordnung des Kontaktrohrs 29 im Schweißbrenner 10, die Anzahl der Kontaktrohre 29 im Schweißbrenner 10, usw. abgestimmt. Die Anordnung der Anschlagfläche 44 ist insbesondere vom Typ des Schweißbrenners 10 abhängig und wird auf diesen entsprechend abgestimmt.

Vom Typ des Brenners 10 ist es auch abhängig, ob der Brennerkörper 28 ein entsprechendes Außengewinde 46 zur Aufnahme der Überwurfmutter 42 aufweist. Derzeit ist es jedoch bei handelsüblichen Schweißbrennern 10 der Fall, dass diese im Brennerkörper 28 ein Innengewinde anstelle des erforderlichen Außengewindes 46 aufweisen.

Demzufolge ist der Einsatz des Zwischenstücks 49 erforderlich, welches in das handelsübliche Innengewinde des Brennerkörpers 28 geschraubt wird und das zur Aufnahme der Überwurfmutter 42 erforderliche Außengewinde 46 aufweist. Für eine derartige Schraubverbindung sind entsprechende Kerben am Zwischenstück 49 vorgesehen, sodass diese beispielsweise mit einem Gabelschlüssel oder dgl. befestigt werden kann. Somit kann mit dem erfindungsgemäßen Zwischenstück 49 nahezu jeder handelsübliche Schweißbrenner 10 mit dem erfindungsgemäßen Kontaktrohr 29 nachgerüstet werden. Des Zwischenstücks 49 kann auch als Adapter angesehen werden. Das Zwischenstück 49 ist im Detail in den Fig. 7 und 8 dargestellt. Hieraus ist das Außengewinde 46 und ein zweites Au-βengewinde 50 sowie der auf der Stirnseite des Zwischenstücks 49 angeordnete Konus 48 ersichtlich. Dabei dient das Außengewinde 50 zur Befestigung im Innengewinde des Brennerkörpers 28 und das Außengewinde 46 zur Befestigung der Überwurfmutter 42. Der Konus 48 an der Stirnseite des Zwischenstücks 49 bewirkt bei der Befestigung des Kontaktrohrs 29 am Gewindestift 49 mit der Überwurfmutter 42, dass der Eintrittsbereich 37 gespreizt wird, sodass die Austrittsöffnung 39 an den Durchmesser des Schweißdrahtes 13 angepasst ist. Der Konus 48 am Zwischenstück 49 und die konische Innenfläche 47 sind derart aufeinander abgestimmt, dass die Austrittsöffnung 39 an den Durchmesser des Schweißdrahtes 13 angepasst ist. Selbstverständlich weist das Zwischenstück 49 auch eine Öffnung 51 entlang seiner Längsachse auf, welche zur Durchführung des Schweißdrahtes 13 dient.

Das Zwischenstück 49 muss nicht als Verschleißteil ausgebildet sein, sondern ist als Teil des Brennerkörpers 28 zu betrachten und nicht als Teil des Kontaktrohrs 29 bzw. Verschleißteils. Somit ist das Zwischenstück 49 eine Art Verlängerung des Brennerkörpers 28, welches den Schweißstrom an das Kontaktrohr 29 weiterleitet und die Wärme des Kontaktrohrs 29 ableitet.

In Fig. 9 ist das erfindungsgemäße Kontaktrohr 29 dargestellt, wie es mit der Überwurfmutter 42 am Zwischenstück 49 befestigt ist, und das Zwischenstück 49 mit dem Brennerkörper 28 verbunden ist. Daraus ist ersichtlich, dass das erfindungsgemäße Kontaktrohr 29 lediglich mit einer Schraubverbindung am Brennerkörper 28 befestigt ist. Dadurch entsteht bei der Wartung bzw. beim Wechsel kein Mehraufwand oder Nachteil gegenüber herkömmlichen Kontaktrohren 29.

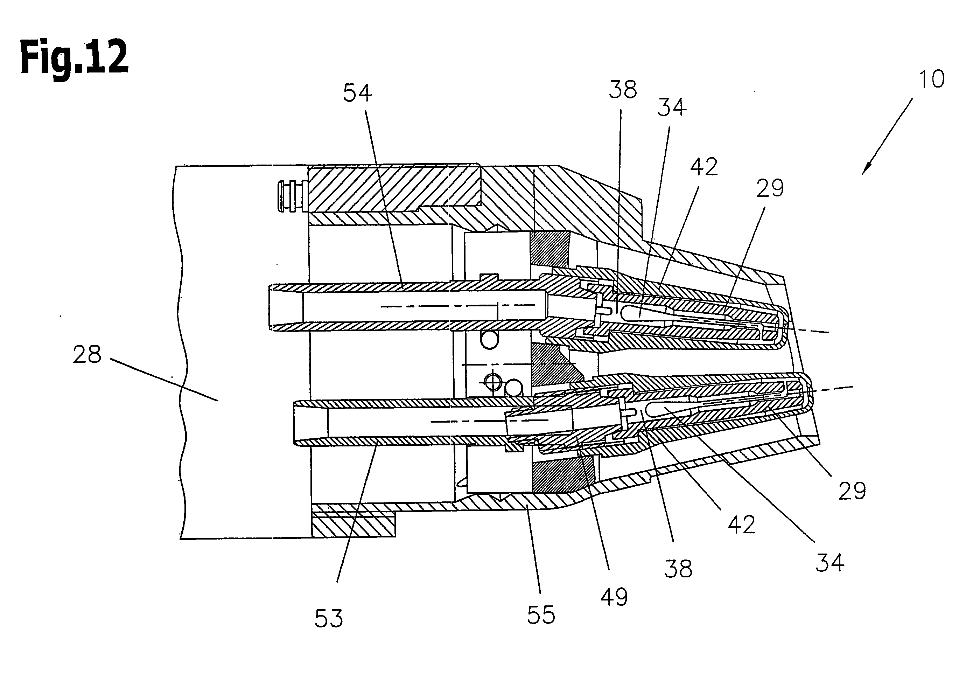

Weitere Ausführungsformen von Kontaktrohren 29 sind in den Fig. 12 bis 14 dargestellt. In Fig. 12 ist ein sogenannter Tandem-Schweißbrenner 10 gezeigt, welcher zwei erfindungsgemäße Kontaktrohre 29 aufweist. Die Kontaktrohre 29 entsprechen im Wesentlichen der zuvor beschriebenen Ausführungsform, welche schräg in eine Verlängerung 53 des Brennerkörpers 28 geschraubt werden. Ebenso kann ein Körper 54 mit einem Gewinde ausgebildet sein, auf das das Kontaktrohr 29 wiederum schräg befestigt wird. Es kann auch eine Überwurfmutter 42 eingesetzt werden, welche über dem Austrittsbereich 35 des Kontaktrohrs 29 angeordnet ist. Dadurch kann der Schutz vor Verschmutzungen noch weiter verbessert werden. Das Kontaktrohr 29 ist also im Wesentlichen zur Gänze von der Überwurfmutter 42 umhüllt, wobei lediglich eine Öffnung für den Schweißdraht 13 in der Überwurfmutter 42 vorhanden ist.

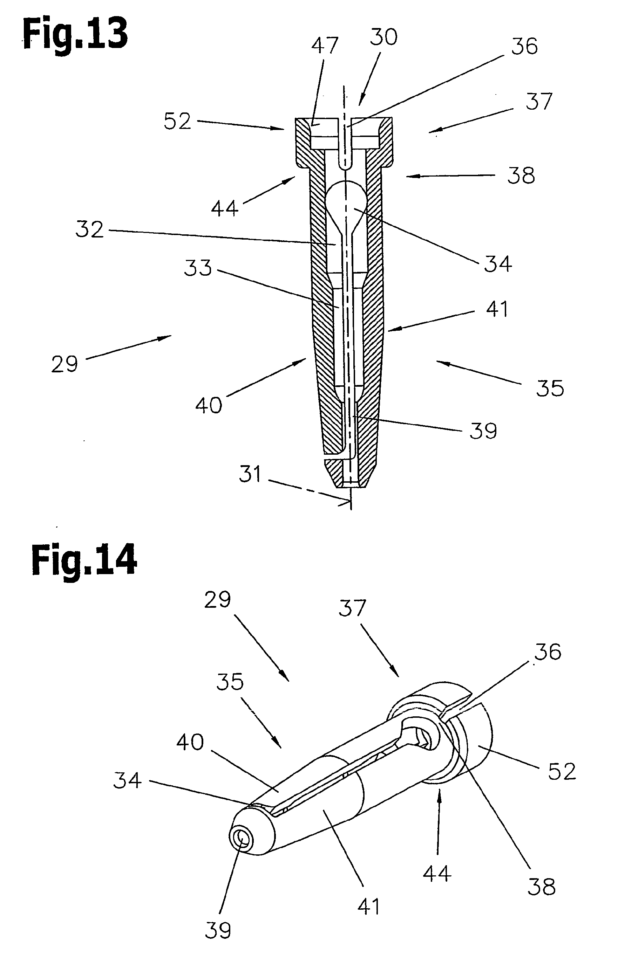

Zusätzlich ist aus den hierin gezeigten Kontaktrohren 29 ersichtlich, dass der Schlitz 34 im Austrittsbereich 35 im Bereich des Stegs 38 eine keulenähnliche Form aufweist. Im Detail ist diese Ausführungsform des Kontaktrohrs 29 in den Fig. 13 und 14 dargestellt. Durch die keulenähnliche Form wird die Beweglichkeit des Austrittsbereichs 35 bzw. der Backen 40, 41 erleichtert, da in diesem Bereich weniger Material vorhanden ist. Ebenso kann durch die Größe der keulenähnlichen Form des Stegs 38 die Kontaktkraft auf den Schweißdraht 13 angepasst und/oder eingestellt und/oder beeinflusst werden. Ein weiteres Merkmal dieser Ausführungsform ist die gewölbte Innenfläche 47 der ringförmigen Erweiterung 52. Dadurch wird erreicht, dass unabhängig von der Anziehkraft der Überwurfmutter 42 stets ein Kontakt zwischen der Innenfläche 47 und dem Konus 48 des Zwischenstücks 49 hergestellt ist. Demnach wird der Stromübergang und die Wärmeableitung zwischen Brennerkörper 28 und Kontaktrohr 29 entscheidend verbessert und kontinuierlich sichergestellt. Dies ist im Wesentlichen auf eine konstante Kontaktfläche zurückzuführen, welche auch durch Fertigungstoleranzen nicht verändert sondern höchstens verschoben wird. Auch wird die Reibungskraft bei der Befestigung des Kontaktrohrs 29 mit der Überwurfmutter 42 durch die gewölbte Innenfläche 47 verringert, sodass die definierte Vorspannung auch bei einem Wechsel des Kontaktrohrs 29 stets konstant bleibt. Dies kann auch bei der zuvor beschriebenen Ausführungsform des Kontkaktrohrs 29 vorgesehen werden.

Beim erfindungsgemäßen Kontaktrohr 29 wird die Überwurfmutter 42 als Mittel zur Einbringung einer Kraft auf das Kontaktrohr 29 eingesetzt, durch welche der Eintrittsbereich 37 gespreizt wird. Aus der Kraft resultiert, dass der Austrittsbereich 35 bzw. die Backen 40, 41 zusammengedrückt werden, eine Kontaktkraft auf den Schweißdraht 13 ausgeübt wird und dieser über die gesamte Standzeit des Kontaktrohrs 29 permanent kontaktiert wird. Selbstverständlich ist auch jeweils eine entsprechende aus dem Stand der Technik bekannte Gasdüse 55, einsetzbar.

Im Allgemeinen sei noch erwähnt, dass das erfindungsgemäße Kontaktrohr 29 im Wesentlichen eine Verengung der Austrittsöffnung 39 bewirkt, sodass bei Förderung des Schweißdrahtes 13 durch die Austrittsöffnung 39 auf den Schweißdraht 13 eine erforderliche Kontaktkraft einwirkt. Auch ist das Kontaktrohr 29 aufgrund der einwirkenden Kraft in einem definierten Bereich, im Wesentlichen im Austrittsbereich 35, beweglich. Dabei sind die Backen 40, 41 die Grundvoraussetzung für die Beweglichkeit des Kontaktrohrs 29.Die Kontaktkraft kann durch Verändern des Hebelverhältnisses am Kontaktrohr 29 eingestellt werden kann. Dies erfolgt beispielsweise durch eine entsprechende Anordnung des Drehpunkts (Steg 38) und der Krafteinbringung.

Ebenso wird beim erfindungsgemäßen Kontaktrohr 29 ein bekanntes Ausschleifen der Austrittsöffnung 39 ausgeglichen , da trotz des durch den geförderten Schweißdraht 13 bewirkten Ausschleifens eine permanente Kontaktierung des Schweißdrahts gewährleistet ist. Dies ist darauf zurückzuführen, dass die auf den Schweißdraht 13 wirkende Kontaktkraft nachjustiert wird. Dafür ist die bereits beschriebene Beweglichkeit des Kontaktrohrs 29 ausschlaggebend bzw. die Tatsache, dass die Backen 40, 41 stets das Bestreben haben, sich zueinander zu bewegen.

## Patentansprüche

1. Kontaktrohr (29) für einen Schweißbrenner (10), mit einer Längsachse (31), entlang welcher eine durchgehende Öffnung (30) zur Führung eines Schweißdrahtes (13) von einem Eintrittsbereich (37) zu einem Austrittsbereich (35) und von einer Austrittsöffnung (39) in Richtung eines Werkstücks (16) vorgesehen ist, wobei zur Kontaktierung des Schweißdrahtes (13) im Austrittsbereich (35) zumindest ein Schlitz (34) vorgesehen ist, **dadurch gekennzeichnet, dass** im Eintrittsbereich (37) des einteilig ausgebildeten Kontaktrohrs (29) zumindest ein weiterer Schlitz (36) vorgesehen ist, wobei der Schlitz (36) im Eintrittsbereich (37) und der Schlitz (34) im Austrittsbereich (35) fluchtend angeordnet sind, und zwischen dem Schlitz (34) im Austrittsbereich (35) und dem zumindest einen Schlitz (36) im Eintrittsbereich (37) ein als Drehpunkt dienender Steg (38) gebildet ist, um welchen Drehpunkt eine gegengleiche Bewegung der beiderseits der Schlitze (34, 36) angeordneten Teile des Kontaktrohrs (29) ermöglicht wird.

2. Kontaktrohr (29) nach Anspruch 1, **dadurch gekennzeichnet, dass** der Schlitz (34) im Austrittsbereich (35) bis vor der Austrittsöffnung (39) des Kontaktrohrs (29) entlang der Längsachse (31) und anschließend schräg zur Längsachse (31) verlaufend angeordnet ist, sodass beiderseits des Schlitzes (34) zwei in ihrer Form unterschiedliche Backen (40, 41) gebildet sind.

3. Kontaktrohr (29) nach Anspruch 2, **dadurch gekennzeichnet, dass** eine Backe (40) im Wesentlichen L-förmig ausgebildet ist und die Austrittsöffnung (39) für den Schweißdraht (13) umschließt.

4. Kontaktrohr (29) nach einem der Ansprüche 1 bis 3, **dadurch gekennzeichnet, dass** zur Kontaktierung des Schweißdrahtes (13) im Austrittsbereich (35) ein Kontaktbereich vorgesehen ist, welcher Kontaktbereich an den Durchmesser des Schweißdrahtes (13) anpassbar ist, und dass die Öffnung (30) bis zum Kontaktbereich derart ausgebildet ist, dass der Schweißdraht (13) vom Eintrittsbereich (37) bis zum Kontaktbereich im Austrittsbereich (35) im Wesentlichen freilaufend geführt werden kann.

5. Kontaktrohr (29) nach einem der Ansprüche 1 bis 4, **dadurch gekennzeichnet, dass** im Eintrittsbereich (37) eine ringförmige Erweiterung (52) mit einem äußeren Durchmesser größer als der übrige Außendurchmesser des Kontaktrohrs (29) vorgesehen ist, und dass an der zur Austrittsöffnung (39) gerichteten Seite der Erweiterung (52) eine Anschlagfläche (44) ausgebildet ist.

6. Kontaktrohr (29) nach Anspruch 5, **dadurch gekennzeichnet, dass** die Innenfläche (47) der ringförmigen Erweiterung (52) konisch zur Öffnung (30) zusammenlaufend zur Aufnahme eines entsprechend konisch geformten Zwischenstücks (49) zur Befestigung am Schweißbrenner (10) ausgebildet ist.

7. Kontaktrohr (29) nach Anspruch 6, **dadurch gekennzeichnet, dass** die Innenfläche (47) der ringförmigen Erweiterung (52) gewölbt ausgebildet ist.

8. Kontaktrohr (29) nach Anspruch 6 oder 7, **dadurch gekennzeichnet, dass** eine Überwurfmutter (42) zur Befestigung des Zwischenstücks (49) vorgesehen ist, sodass durch das konisch geformte Zwischenstück (49) der Eintrittsbereich (37) gespreizt und in der Folge die Backen (40, 41) im Austrittsbereich (35) zueinander bewegt werden.

9. Kontaktrohr (29) nach Anspruch 8, **dadurch gekennzeichnet, dass** die Überwurfmutter (42) als Schutzhülle über dem Austrittsbereich (35) angeordnet ist.

10. Kontaktrohr (29) nach einem der Ansprüche 1 bis 9, **dadurch gekennzeichnet, dass** der Austrittsbereich (35) zur Austrittsöffnung (39) hin konisch zusammenlaufend ausgebildet ist.

11. Kontaktrohr (29) nach einem der Ansprüche 6 bis 10, **dadurch gekennzeichnet, dass** das Zwischenstück (49) eine Bohrung (50) für den Schweißdraht (13), einen Konus (48) an der einen Seite zum Einsatz an die konisch geformte Innenfläche (47), und ein Außengewinde (50) an der dem Konus (48) gegenüberliegenden Seite zur Verbindung mit dem Schweißbrenner (10) aufweist.

12. Kontaktrohr (29) nach Anspruch 11, **dadurch gekennzeichnet, dass** an der Seite des Konus (48) des Zwischenstücks (49) ein Au-βengewinde (46) zur Verbindung mit einem entsprechenden Innengewinde (45) der Überwurfmutter (42) angeordnet ist.

## Claims

1. A contact tube (29) for a welding torch (10), having a longitudinal axis (31), along which a continuous opening (30) is provided for guiding a welding wire (13) from an inlet area (37) to an outlet area (35) and from an outlet opening (39) in the direction of a workpiece (16), at least one slot (34) being provided for contacting the welding wire (13) in the outlet area (35), **characterized in that** at least one further slot (36) is provided in the inlet area (37) of the contact tube (29), which is implemented in one piece, the slot (36) in the inlet area (37) and the slot (34) in the outlet area (35) being situated aligned, and a web (38), which is used as a pivot point, being formed between the slot (34) in the outlet area (35) and the at least one slot (36) in the inlet area (37), around which pivot point a mirror-inverted movement of the parts of the contact tube (29) situated on both sides of the slots (34, 36) is made possible.

2. The contact tube (29) according to Claim 1, **characterized in that** the slot (34) in the outlet area (35) is situated running along the longitudinal axis (31) up to before the outlet opening (39) of the contact tube (29) and subsequently diagonally to the longitudinal axis (31), so that two jaws (40, 41) which differ in their shape are formed on both sides of the slot (34).

3. The contact tube (29) according to Claim 2, **characterized in that** one jaw (40) is implemented as essentially L-shaped and encloses the outlet opening (39) for the welding wire (13).

4. The contact tube (29) according to one of Claims 1 through 3, **characterized in that** a contact area is provided for contacting the welding wire (13) in the outlet area (35), which contact area is adaptable to the diameter of the welding wire (13), and the opening (30) is implemented up to the contact area in such a manner that the welding wire (13) can be guided essentially free running from the inlet area (37) up to the contact area in the outlet area (35).

5. The contact tube (29) according to one of Claims 1 through 4, **characterized in that** a ring-shaped expansion (52) having an external diameter greater than the remaining external diameter of the contact tube (29) is provided in the inlet area (37), and a stop surface (44) is implemented on the side of the expansion (52) oriented toward the outlet opening (39).

6. The contact tube (29) according to Claim 5, **characterized in that** the inner surface (47) of the ring-shaped expansion (52) is implemented as tapering conically toward the opening (30) to receive a corresponding conical adapter part (49) for fastening on the welding torch (10).

7. The contact tube (29) according to Claim 6, **characterized in that** the inner surface (47) of the ring-shaped expansion (52) is implemented as curved.

8. The contact tube (29) according to Claim 6 or 7, **characterized in that** a union nut (42) is provided for fastening the adapter part (49), so that the inlet area (37) is spread apart by the conical adapter part (49) and as a result the jaws (40, 41) in the outlet area (35) are moved toward one another.

9. The contact tube (29) according to Claim 8, **characterized in that** the union nut (42) is situated as a protective envelope over the outlet area (35).

10. The contact tube (29) according to one of Claims 1 through 9, **characterized in that** the outlet area (35) is implemented as conically tapering toward the outlet opening (39).

11. The contact tube (29) according to one of Claims 6 through 10, **characterized in that** the adapter part (49) has a hole (50) for the welding wire (13), a cone (48) on one side for use on the conical inner surface (47), and an external thread (50) on the side diametrically opposite to the cone (48) for connection to the welding torch (10).

12. The contact tube (29) according to Claim 11, **characterized in that** an external thread (46) for connection to a corresponding internal thread (45) of the union nut (42) is situated on the side of the cone (48) of the adapter part (49).

## Revendications

1. Tube de contact (29) pour un chalumeau de soudage (10), avec un axe longitudinal (31), le long duquel il est prévu une ouverture continue (30) pour guider un fil de soudage (13) à partir d'une zone d'entrée (37) jusqu'à une zone de sortie (35) et à partir d'une ouverture de sortie (39) en direction d'une pièce (16), dans lequel il est prévu au moins une fente (34) pour la mise en contact du fil de soudage (13) dans la zone de sortie (35), **caractérisé en ce qu'**il est prévu au moins une autre fente (36) dans la zone d'entrée (37) du tube de contact (29) conformé en une seule pièce, dans lequel la fente (36) dans la zone d'entrée (37) et la fente (34) dans la zone de sortie (35) sont ménagées en alignement et une barrette (38) servant de centre de rotation est formée entre la fente (34) dans la zone de sortie (35) et la au moins une fente (36) dans la zone d'entrée (37), autour duquel centre de rotation un mouvement diamétralement opposé des parties du tube de contact (29) agencées des deux côtés des fentes (34, 36) est rendu possible.

2. Tube de contact (29) selon la revendication 1, **caractérisé en ce que** la fente (34) est ménagée pour s'étendre dans la zone de sortie (35) jusque devant l'ouverture de sortie (39) du tube de contact (29) le long de l'axe longitudinal (31) et ensuite en oblique par rapport à l'axe longitudinal (31) de sorte que deux joues (40, 41) de formes différentes soient formées des deux côtés de la fente (34).

3. Tube de contact (29) selon la revendication 2, **caractérisé en ce qu'**une joue (40) a sensiblement une forme en L et enserre l'ouverture de sortie (39) pour le fil de soudage (13).

4. Tube de contact (29) selon l'une quelconque des revendications 1 à 3, **caractérisé en ce qu'** une zone de contact est prévue pour la mise en contact du fil de soudage (13) dans la zone de sortie (35), laquelle zone de contact peut être adaptée au diamètre du fil de soudage (13), et **en ce que** l'ouverture (30) est conformée jusqu'à la zone de contact de telle sorte que le fil de soudage (13) peut être guidé de manière sensiblement spontanée à partir de la zone d'entrée (37) jusqu'à la zone de contact dans la zone de sortie (35).

5. Tube de contact (29) selon l'une quelconque des revendications 1 à 4, **caractérisé en ce qu'**il est prévu dans la zone d'entrée (37) un élargissement annulaire (52) de diamètre extérieur plus grand que le diamètre extérieur restant du tube de contact (29), et **en ce qu'**une surface d'arrêt (44) est formée sur le côté de l'élargissement (52) dirigé vers l'ouverture de sortie (39).

6. Tube de contact (29) selon la revendication 5, **caractérisé en ce que** la surface intérieure (47) de l'élargissement annulaire (52) est conformée en cône convergeant vers l'ouverture (30) pour recevoir une pièce intercalaire (49) de forme conique correspondante pour une fixation sur le chalumeau de soudage (10).

7. Tube de contact (29) selon la revendication 6, **caractérisé en ce que** la surface intérieure (47) de l'élargissement annulaire (52) a une forme bombée.

8. Tube de contact (29) selon la revendication 6 ou 7, **caractérisée en ce qu'**il est prévu un écrou d'accouplement (42) pour fixer la pièce intercalaire (49) de sorte que la zone d'entrée (37) soit évasée par la pièce intercalaire (49) de forme conique et que les joues (40, 41) soient en conséquence bougées l'une par rapport à l'autre dans la zone de sortie (35).

9. Tube de contact (29) selon la revendication 8, **caractérisée en ce que** l'écrou d'accouplement (42) est aménagé sous la forme d'une enveloppe protectrice par-dessus la zone de sortie (35).

10. Tube de contact (29) selon l'une quelconque des revendications 1 à 9, **caractérisé en ce que** la zone de sortie (35) est conformée en cône convergeant vers l'ouverture de sortie (39).

11. Tube de contact (29) selon l'une quelconque des revendications 6 à 10, **caractérisé en ce que** la pièce intercalaire (49) présente un alésage (50) pour le fil de soudage (13), un cône (48) sur un côté pour l'insertion dans la surface intérieure de forme conique (47) et un filet extérieur (50) sur le côté opposé au cône (48) pour un raccordement au chalumeau de soudage (10).

12. Tube de contact (29) selon la revendication 1, **caractérisé en ce que** sur le côté du cône (48) de la pièce intercalaire (49) on agence un filet extérieur (46) pour un raccordement à un filet intérieur correspondant (45) de l'écrou d'accouplement (42).
